# EUROPÄISCHE PATENTANMELDUNG

(11) **EP 1 492 136 A1**
(43) Veröffentlichungstag der Anmeldung: **29.12.2004**
(21) Anmeldenummer: 03101840.1
(22) Anmeldetag: 23.06.2003
(51) Int. Cl.: H01H 13/70

(54) **Drucksensor in Folienbauweise**

(71) Anmelder: IEE International Electronics & Engineering S.A.R.L., 2632 Luxembourg (LU)
(72) Erfinder: Lorenz, Holger, 54470, Bernkastel (DE)
(74) Vertreter: Beissel, Jean

(57) **Zusammenfassung**

Ein Drucksensor in Folienbauweise umfasst
eine erste Trägerfolie und eine zweite Trägerfolie, die mittels eines Abstandhalters in einem gewissen Abstand zueinander angeordnet sind, wobei der Abstandhalter mindestens eine Aussparung aufweist, die einen aktiven Bereich des Drucksensors definiert, in dem sich die beiden Trägerfolien gegenüber liegen,
eine erste Elektrode und eine zweite Elektrode und eine Schicht aus einem drucksensitiven Material, wobei die erste Elektrode, die zweite Elektrode und die Schicht aus drucksensitivem Material derart in dem aktiven Bereich auf die erste bzw. zweite Trägerfolie aufgebracht sind, dass beim Zusammendrücken der Trägerfolien durch die drucksensitive Schicht ein elektrischer Kontakt zwischen der ersten und der zweiten Elektrode hergestellt wird. Erfindungsgemäß weist der Drucksensor mindestens eine dritte Elektrode auf, die derart in dem aktiven Bereich des Drucksensors auf die erste oder zweite Trägerfolie aufgebracht ist, dass beim Zusammendrücken der Trägerfolien durch die drucksensitive Schicht ein elektrischer Kontakt zwischen der dritten Elektrode und der ersten Elektrode und/oder zwischen der dritten Elektrode und der zweiten Elektrode hergestellt wird.

## Beschreibung

Die vorliegende Erfindung betrifft einen Drucksensor in Folienbauweise.

Schaltelemente in Folienbauweise, wie z.B. Membranschalter, Foliendrucksensoren o.ä., umfassen im allgemeinen mindestens zwei im wesentlichen elastische Folienschichten, die in einem gewissen Abstand zueinander angeordnet sind. Dies geschieht z.B. mittels eines Abstandhalters, der um den aktiven Bereich des Schaltelementes herum angeordnet ist und auf den die beiden Folienschichten mit ihren jeweiligen Rändern aufgeklebt sind. In dem aktiven Bereich des Schaltelementes sind auf die Folienschichten verschiedene Kontaktanordnungen aufgebracht zwischen denen beim Zusammendrücken der beiden Folienschichten ein elektrischer Kontakt hergestellt wird, so dass das Schaltelement ausgelöst wird. Beim Nachlassen des Drucks auf die Folienschichten nehmen diese aufgrund ihrer Elastizität wiederum ihre beabstandete Position zueinander ein und der elektrische Kontakt zwischen den verschiedenen Kontaktanordnungen wird unterbrochen.

Derartige Schaltelemente weisen ein sehr gutes Ansprechverhalten auf, das darüber hinaus durch die Ausgestaltung der elastischen Folienschichten an den jeweiligen Einsatzzweck angepasst werden kann. Ein solches Schaltelement weist weiterhin eine sehr geringe Einbauhöhe auf und zeichnet sich insbesondere durch die vielfältigen Möglichkeiten der Formgebung der Schaltfläche aus. Hierdurch eigenen sich derartige Schaltelemente besonders gut für den Einsatz in den Bereichen, in denen ein geringes Baumaß und eine flexible Formgestaltung der Schaltflächen erforderlich ist.

Foliendrucksensoren weisen gegenüber einfachen Membranschaltern eine zusätzliche drucksensitive Schicht auf, die derart in dem aktiven Bereich des Sensors angeordnet ist, dass eine elektrische Kontaktierung zwischen den Kontaktanordnungen über die drucksensitive Schicht erfolgt. Zwei Typen solcher Foliendrucksensoren werden allgemein eingesetzt.

Bei Foliendrucksensoren, die im Durchgangsmodus arbeiten, ist ein erstes Kontaktelement auf einer ersten Trägerfolie und ein zweites Kontaktelement auf einer zweiten Trägerfolie angeordnet, wobei die beiden Trägerfolien in einem gewissen Abstand derart zueinander angeordnet sind, dass sich die beiden Kontaktelemente gegenüberstehen. Zwischen den beiden Kontaktelementen ist eine Schicht aus einem Halbleitermaterial angeordnet, die beim Auslösen des Sensors gegen die beiden Kontaktelemente gepresst wird wobei der Widerstand zwischen den beiden Kontaktelementen je nach Anpressdruck variiert.

Foliendrucksensoren in Kurzschlussmodus weisen zwei Kontaktelemente auf, die auf einer ersten Trägerfolie in einem bestimmten Absatz zueinander angeordnet sind. Auf einer zweiten beabstandeten Trägerfolie ist eine Halbleiterschicht derart angebracht, dass sie den Bereich zwischen den beiden Kontaktelementen überdeckt und die beiden Kontaktelemente beim Zusammenpressen der Trägerfolien druckabhängig kontaktiert.

Unabhängig von dem jeweiligen Typ des Foliendrucksensors, weist dessen druckabhängige Widerstandskennlinie einen Einsatzpunkt auf, der dem Druck entspricht, bei dem der elektrische Kontakt zwischen den beiden Elektrodenelementen erstmals hergestellt wird. Oberhalb dieses Einsatzpunktes weist die Kennlinie einen dynamischen Verlauf auf, der durch entsprechende Ausgestaltung der Trägerfolien, der drucksensitiven Schicht und der Elektrodenkonfiguration den Anforderungen der jeweiligen Anwendung angepasst werden kann. Auch der Einsatzpunkt der Kennlinie kann beispielsweise durch geeignete Ausgestaltung der Trägerfolien und des Abstandhalters auf einen gewünschten Wert eingestellt werden.

Allerdings ist der so eingestellte Wert des Einsatzpunktes nur für eine mittige Auslösung des Sensorelements gültig, d.h. für eine Druckkraft, die auf das Zentrum des aktiven Bereichs der Sensorzelle wirkt. Erfolgt die Auslösung außermittig, werden die Elektroden aufgrund der Membranmechanik der Sensorzelle erst bei einer Druckkraft kontaktiert, die oberhalb der Einsatzschwelle liegt. Dies bedeutet jedoch dass eine tatsächliche Auslösung des Sensorelements durch eine Druckkraft im Bereich der Einsatzschwelle bei einer außermittigen Auslösung nicht erkannt wird.

### Aufgabe der Erfindung

Aufgabe der vorliegenden Erfindung ist es folglich, einen Drucksensor vorzuschlagen, bei dem eine außermittige Auslösung erkannt werden kann.

### Allgemeine Beschreibung der Erfindung

Diese Aufgabe wird erfindungsgemäß gelöst durch einen Drucksensor nach Anspruch 1. Dieser Drucksensor in Folienbauweise umfasst
eine erste Trägerfolie und eine zweite Trägerfolie, die mittels eines Abstandhalters in einem gewissen Abstand zueinander angeordnet sind, wobei der Abstandhalter mindestens eine Aussparung aufweist, die einen aktiven Bereich des Drucksensors definiert, in dem sich die beiden Trägerfolien gegenüber liegen,
eine erste Elektrode und eine zweite Elektrode und eine Schicht aus einem drucksensitiven Material, wobei die erste Elektrode, die zweite Elektrode und die Schicht aus drucksensitivem Material derart in dem aktiven Bereich auf die erste bzw. zweite Trägerfolie aufgebracht sind, dass beim Zusammendrücken der Trägerfolien durch die drucksensitive Schicht ein elektrischer Kontakt zwischen der ersten und der zweiten Elektrode hergestellt wird. Erfindungsgemäß weist der Drucksensor mindestens eine dritte Elektrode auf, die derart in dem aktiven Bereich des Drucksensors auf die erste oder zweite Trägerfolie aufgebracht ist, dass beim Zusammendrücken der Trägerfolien durch die drucksensitive Schicht ein elektrischer Kontakt zwischen der dritten Elektrode und der ersten Elektrode und/oder zwischen der dritten Elektrode und der zweiten Elektrode hergestellt wird.

Die dritte Elektrode des erfindungsgemäßen Drucksensors ist vorzugsweise außermittig in dem aktiven Bereich des Drucksensors angeordnet. Bei einer Druckkraft, die außermittig auf den Drucksensor wirkt, kann die dritte Elektrode demnach über die drucksensitive Schicht mit der ersten und oder der zweiten Elektrode kontaktiert werden, bevor durch die drucksensitive Schicht ein elektrischer Kontakt zwischen der ersten Elektrode und der zweiten Elektrode hergestellt wird. Dieser elektrischer Kontakt kann über eine angeschlossene Auswerteschaltung beispielsweise durch eine Widerstandsmessung zwischen der dritten Elektrode und der ersten und/oder zweiten Elektrode gemessen werden. Im Gegensatz zu herkömmlichen Drucksensoren kann mit dem vorgeschlagenen Drucksensor daher eine außermittige Auslösung des Sensors bereits erkannt werden, wenn die auf den Drucksensor einwirkende Kraft im Bereich der eigentlichen Einsatzschwelle des Drucksensors liegt.

Es ist anzumerken, dass die zusätzliche mindestens eine dritte Elektrode ebenfalls zur Überprüfung des Drucksensors bei seinem bestimmungsgemäßen Einsatz verwendet werden kann. In der Tat kann bei dem vorgeschlagenen Drucksensor abwechselnd oder gleichzeitig der Widerstand zwischen der ersten und der zweiten Elektrode und der Widerstand zwischen der dritten und der ersten und/oder zweiten Elektrode gemessen und der entsprechende Wert der auf das Schaltelement einwirkenden in Druckkraft ermittelt werden. Falls zwischen den ermittelten Werten der Druckkraft größere Abweichungen festgestellt werden, kann dies auf ein Fehlverhalten der Sensorzelle hinweisen.

Darüber hinaus kann, bei geeigneter Anordnung der einzelnen Elektroden zueinander, die mindestens eine dritte Elektrode dazu dienen, den Drucksensor mit einer zusätzlichen Schaltstufe zu versehen. Die Elektroden können beispielsweise derart zueinander angeordnet sein, dass ein erster elektrischer Kontakt zwischen beispielsweise der ersten und der zweiten Elektrode beim Überschreiten einer ersten Druckschwelle entsteht, während ein zweiter elektrischer Kontakt zu zwischen der dritten Elektroden und der ersten bzw. der zweiten Elektrode erst beim Überschreiten einer zweiten, höheren Druckschwelle entsteht. Auf diese Weise kann bei geeigneter Anzahl der zusätzlichen dritten Elektroden im Prinzip ein Schaltelement mit beliebig vielen Schaltstufen hergestellt werden.

In einer ersten Ausgestaltung des Drucksensors sind die erste, die zweite und die mindestens eine dritte Elektrode nebeneinander in einem gewissen Abstand zueinander auf der ersten Trägerfolie aufgebracht. Die drucksensitive Schicht ist dann auf der zweiten Trägerfolie derart aufgebracht, dass die drucksensitive Schicht der ersten Elektrode, der zweiten Elektrode und der mindestens einen dritten Elektrode gegenüber angeordnet ist.

In einer anderen Ausgestaltung sind die erste Elektrode und die zweite Elektrode in einem gewissen Abstand zueinander auf der ersten Trägerfolie angeordnet und die mindestens eine dritte Elektrode auf der zweiten Trägerfolie derart angeordnet, dass die mindestens eine dritte Elektrode der ersten und der zweiten Elektrode gegenüber angeordnet ist. Die drucksensitive Schicht kann bei dieser Ausgestaltung des Drucksensors auf die mindestens eine dritte Elektrode oder auf die erste Elektrode und die zweite Elektrode aufgebracht sein.

In einer weiteren Ausgestaltung sind die erste Elektrode und die zweite Elektrode in einem gewissen Abstand zueinander auf der ersten Trägerfolie aufgebracht und die mindestens eine dritte Elektrode auf der zweiten Trägerfolie derart angeordnet, dass die mindestens eine dritte Elektrode der ersten Elektrode gegenüber angeordnet ist, wobei die drucksensitive Schicht derart auf der zweiten Trägerfolie und der mindestens einen dritten Elektrode aufgebracht ist, dass die drucksensitive Schicht der ersten und der zweiten Elektrode gegenüber angeordnet ist.

Eine Abwandlung dieser Ausgestaltung weist mindestens zwei zusätzlichen Elektroden auf. Bei einer solchen Ausgestaltung sind die erste Elektrode und die zweite Elektrode in einem gewissen Abstand zueinander auf der ersten Trägerfolie aufgebracht. Eine dritte Elektrode und eine vierte Elektrode sind auf der zweiten Trägerfolie derart angeordnet, dass die dritte Elektrode der ersten Elektrode gegenüber angeordnet ist und die vierte Elektrode der zweiten Elektrode gegenüber angeordnet ist. Die drucksensitive Schicht ist vorzugsweise derart auf der zweiten Trägerfolie, der dritten Elektrode und der vierten Elektrode aufgebracht, dass die drucksensitive Schicht der ersten und der zweiten Elektrode gegenüber angeordnet ist.

Es ist anzumerken, dass neben den explizit beschriebenen Ausgestaltungen auch Kombinationen dieser Ausgestaltungen möglich sind.

Die vorgeschlagenen Drucksensoren sind äußerst vielfältig einsetzbar. Eine ganz spezifische Anwendung finden dieser Drucksensoren beispielsweise im Bereich der Sitzbelegungssensoren für Fahrzeuge. Ein solcher Sitzbelegungssensor, umfasst beispielsweise zwei der oben beschriebenen Drucksensoren, die in einem gewissen Abstand zueinander einer Fläche eines Sitzes derart zugeordnet werden können, dass ein erster Drucksensor einem ersten Bereich des Sitzes zugeordnet ist und ein zweiter Drucksensor einem zweiten Bereich des Sitzes zugeordnet ist. Der erste und der zweite Drucksensor sind dabei vorzugsweise derart miteinander verschaltet, dass eine logische UND-Verknüpfung realisiert ist.

In einer möglichen Ausgestaltung des Sitzbelegungssensors sind der erste und der zweite Drucksensor in Serie geschaltet, wobei beispielsweise die jeweils dritte Elektrode des ersten und des zweiten Drucksensors miteinander kontaktiert sind.

In einer weiteren Ausgestaltung des Sitzbelegungssensors mit mindestens zwei weiteren Drucksensoren, ist ein dritter Drucksensor mit dem ersten Drucksensor derart miteinander verschaltet, dass eine logische ODER-Verknüpfung realisiert ist und ein vierter Drucksensor mit dem zweiten Drucksensor derart miteinander verschaltet, dass eine logische ODER-Verknüpfung realisiert ist. Zur Realisierung der logischen Verknüpfungen sind vorzugsweise jeweils der erste und der dritte Drucksensor und der zweite und der vierte Drucksensor parallel verschaltet. Dies kann beispielsweise dadurch erfolgen, dass die jeweils ersten Elektroden des ersten und des dritten Drucksensors bzw. des zweiten und des vierten Drucksensors miteinander kontaktiert sind, wobei die jeweils zweiten Elektroden des ersten und des dritten Drucksensors bzw. des zweiten und des vierten Drucksensors miteinander kontaktiert sind.

### Detaillierte Beschreibung anhand der Figuren

Im folgenden wird eine Ausgestaltung der Erfindung anhand der beiliegenden Figuren beschrieben. Es zeigen:
- Fig.1:: einen Schnitt durch eine Ausgestaltung eines Drucksensors;
- Fig.2:: den Drucksensor von Fig. 1 bei einer mittigen Auslösung;
- Fig.3:: den Drucksensor von Fig. 1 bei einer außermittigen Auslösung;
- Fig.4:: ein Blockschaltbild eines nicht ausgelösten Drucksensors gemäss Fig. 1;
- Fig.5:: eine 3D Ansicht des Aufbaus des Drucksensors der Fig. 1;
- Fig.6:: ein Blockschaltbild eines Sitzbelegungssensor mit Drucksensoren;
- Fig.7:: einen Schnitt durch eine weitere Ausgestaltung eines Drucksensors;
- Fig.8:: einen Schnitt durch eine weitere Ausgestaltung eines Drucksensors.

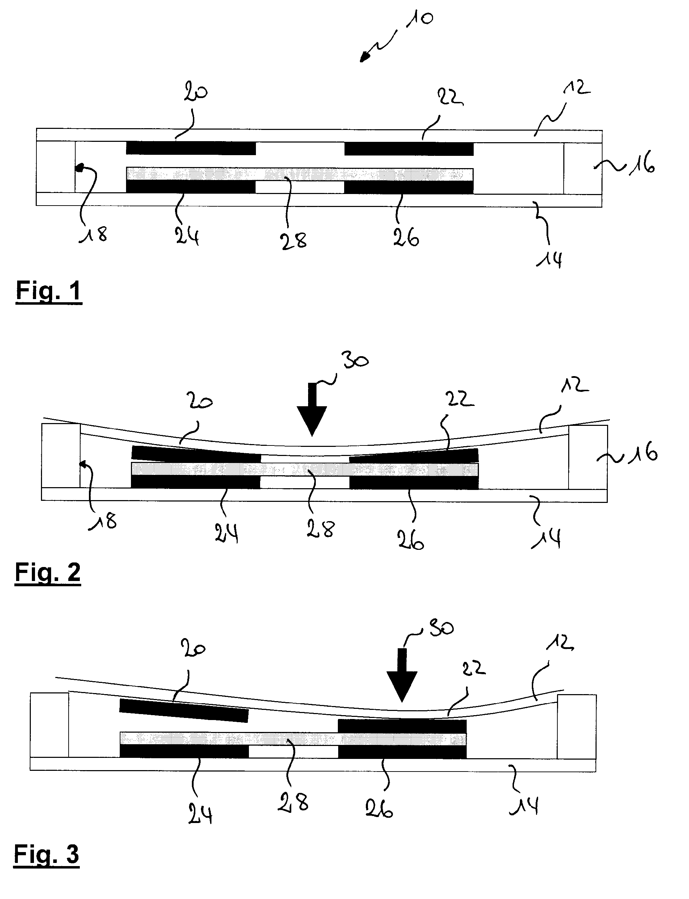

Fig. 1 zeigt einen Schnitt durch eine erste Ausgestaltung eines Drucksensors. Der Drucksensor 10 umfasst eine erste Trägerfolie 12 und eine zweite Trägerfolie 14, die mittels eines Abstandhalters 16 in einem gewissen Abstand zueinander angeordnet sind. Der Abstandhalter 16 weist eine Aussparung 18 auf, die einen aktiven Bereich des Drucksensors definiert.

Innerhalb der Aussparung 16 sind eine erste Elektrode 20 und eine zweite Elektrode 22 in einem gewissen Abstand zueinander auf der ersten Trägerfolie 12 aufgebracht. Analog sind eine dritte Elektrode 24 und eine vierte Elektrode 26 in einem gewissen Abstand auf der zweiten Trägerfolie 14 aufgebracht. Die dritte Elektrode und die vierte Elektrode sind dabei derart angeordnet, dass die dritte Elektrode der ersten Elektrode 20 gegenüber angeordnet ist während die vierte Elektrode 26 der zweiten Elektrode 22 gegenüber angeordnet ist. Eine Schicht 28 aus einem drucksensitiven Material ist derart auf die dritte und vierte Elektrode 24 bzw. 26 aufgebracht, dass der Abstand zwischen den beiden Elektroden 24 und 26 überspannt wird.

Der in der Fig. 1 dargestellte Drucksensor 10 stellt im wesentlichen einen Drucksensor im Kurzschlussmodus "shunt mode" dar, bei dem, beim Zusammendrücken der beiden Trägerfolien 12 und 14, durch die drucksensitive Schicht 28 ein elektrischer Kontakt zwischen den Elektroden 20 und 22 hergestellt wird. Eine Ansicht des ausgelösten Drucksensors 10 bei einer mittigen Auslösung (dargestellt durch den Pfeil 30) ist in Fig. 2 dargestellt.

Durch die Anordnung von der dritten Elektrode 24 bzw. der vierten Elektrode 26 kann jedoch bei dem dargestellten Drucksensor 10 ebenfalls eine Kontaktierung in den sogenannten Durchgangsmodus "through mode" jeweils zwischen der Elektrode 20 und der Elektrode 24 bzw. der Elektrode 22 und der Elektrode 26 festgestellt werden. Hierdurch kann bei dem vorgeschlagenen Drucksensor eine Auslösung des Sensors auch dann erkannt werden, wenn diese außermittig erfolgt. Eine solche außermittige Auslösung des Drucksensors ist in der Fig. 3 dargestellt.

Wie in Fig. 3 dargestellt, wirkt die Druckkraft (dargestellt durch den Pfeil 30) nicht auf das Zentrum des aktiven Bereiches des Sensors sondern seitlich von den Zentrum versetzt. Die Deformationen der Trägerfolie 12 unter dem Einfluss der Druckkraft erfolgte demzufolge asymmetrisch bezüglich der Sensormitte so dass bei gleichbleibender Druckkraft eine Kontaktierung der Elektroden 20 und 22 über die drucksensitive Schicht 28 nicht erfolgt. Bei den klassischen Foliendrucksensoren wird eine solche Auslösung des Drucksensors demzufolge nicht erkannt. Bei dem vorgeschlagenen Drucksensor hingegen kann die außermittige Auslösung dadurch festgestellt werden, dass zwischen der Elektrode 22 und der gegenüberliegenden Elektrode 26 bereits eine Kontaktierung über die drucksensitive Schicht 28 erfolgt ist.

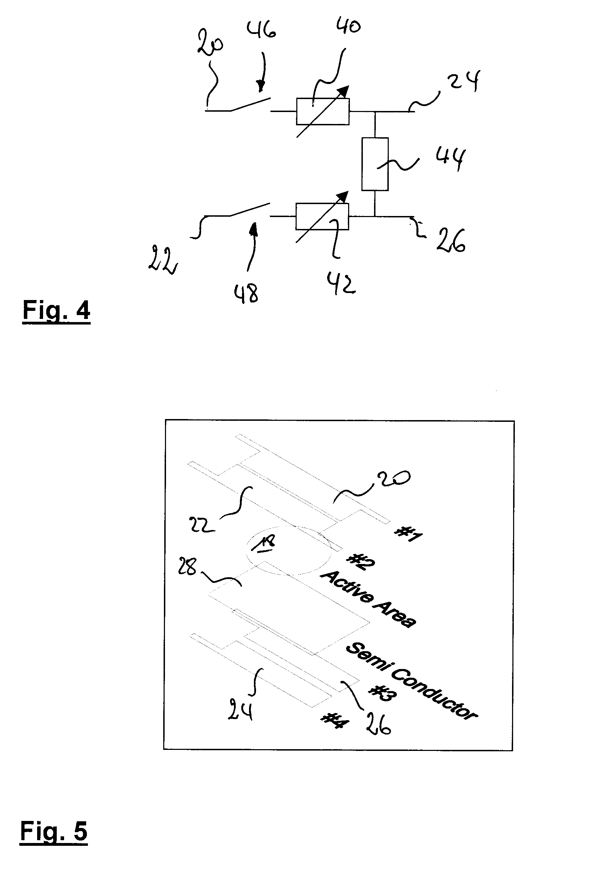

In der Fig. 4 ist ein Blockschaltbild des nicht ausgelösten Drucksensors aus der Fig. 1 dargestellt. Die druckabhängige Kontaktierung zwischen der Elektrode 20 und der drucksensitiven Schicht 28 ist in diesem Blockschaltbild als variabler Widerstand 40 dargestellt. Analog ist die druckabhängige Kontaktierung zwischen der Elektrode 22 und der drucksensitiven Schicht 28 als variabler Widerstand 42 dargestellt. Der Widerstand 44 stellt den in den Widerstand in der drucksensitive Schicht 28 zwischen den beiden Elektroden dar. Bei einer Auslösung des Sensorelements wie sie beispielsweise in Fig. 2 dargestellt ist, kann ein elektrischer Strom von der Elektrode 20 über die drucksensitive Schicht 28 zu der Elektrode 22 fließen. Ist der Drucksensor nicht ausgelöst, so besteht zwischen den Elektroden 20 bzw. 22 und der drucksensitive Schicht keine elektrischer Kontakt. Dies ist in der Fig. 4 durch die beiden Schalter 46 und 48 dargestellt.

Die Fig. 5 zeigt die verschiedenen Elemente des vorgeschlagenen Drucksensors in einer schematischen 3D Ansicht. Der Abstandhalter 16 ist in dieser Ausgestaltung nur schematisch durch die kreisförmige Aussparung 18 dargestellt.

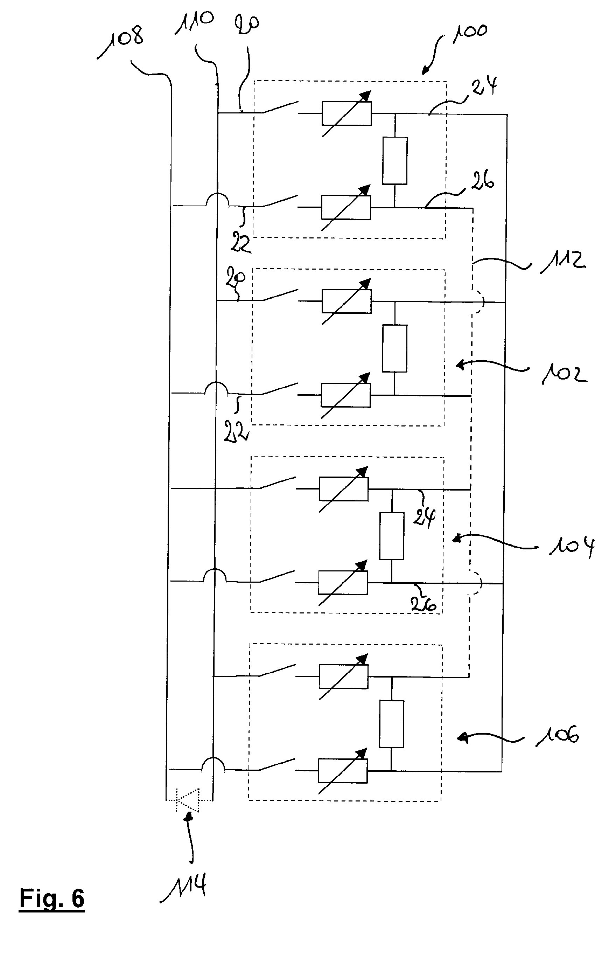

In der Fig. 6 ist schematisch ein Sitzbelegungssensor dargestellt, der mehrere der oben beschriebenen Drucksensoren 100, 102, 104, 106 umfasst. Die einzelnen Drucksensoren 100 bis 106 sind dabei in einem gewissen Abstand zueinander angeordnet, so dass jeder der Drucksensoren einem bestimmten Bereich eines Fahrzeugsitzes zugeordnet werden kann.

Die einzelnen Drucksensoren 100, 102, 104, 106 sind mittels gemeinsamer Anschlussleitungen 108 und 110 an eine nicht dargestellte auswerten Einheit angeschlossen. Die einzelnen Drucksensoren sind hierbei parallel geschaltet, wobei jeweils die Elektrode 20 mit dem Anschlussleiter 110 verbunden ist während die Elektrode 22 mit dem Anschlussleiter 108 verbunden ist. Durch diese Verschaltung können die einzelnen Drucksensoren jeder unabhängig eine lokale, auf den Fahrzeugsitz einwirkende Druckkraft detektieren und erlauben somit eine Erkennung einer lokalen Belegung des Sitzes. Das Ausgangssignal des Sitzbelegungssensors setzt sich in diesem Fall aus einer Parallelschaltung der Widerstandsketten 40-44-42 der ausgelösten Drucksensoren zusammen.

Zusätzlich zu dieser Verschaltung sind die Elektroden 24 der Sensoren 100 und 102 mit den Elektroden 26 der Sensoren 104 und 106 verbunden. Diese Verschaltung bewirkt, dass die Parallelschaltung der Kontakte (46, 40) der Drucksensoren 100 und 102 mit der Parallelschaltung der Kotakte (42, 48) der Drucksensoren 104 und 106 in Serie zwischen den beiden Anschlussleitern 108 und 110 verschaltet sind.

Bei einer Sitzbelegung, die eine bestimmte Ausdehnung derart aufweist, dass sowohl beispielsweise der Kontakt (46, 40) des Drucksensors 102 und der Kontakt (42, 48) des Drucksensors 106 geschlossen sind, ist das Ausgangssignal (Widerstand) des Sitzbelegungssensors demnach von der Serienschaltung der variablen Widerstände 40 des Drucksensors 102 und 42 des Drucksensors 106 bestimmt. Dieser Zustand des Sitzbelegungssensors ist bei entsprechender Ausgestaltung der einzelnen Drucksensoren eindeutig identifizierbar, so dass eine derartige flächige Belegung des Sitzes gesondert erkannt werden kann.

Es ist anzumerken, dass optional die Elektroden 26 der Sensoren 100 und 102 mit den Elektroden 24 der Sensoren 104 und 106 verbunden sein können. Dies ist durch die optionale Leiterbahn 112 in der Fig. 6 gestrichelt eingezeichnet.

Weiterhin ist zu bemerken, dass zur Überprüfung der Integrität der Leiterbahnen zwischen den Anschlussleitern 108 und 110 eine Diode 114 verschaltet sein kann.

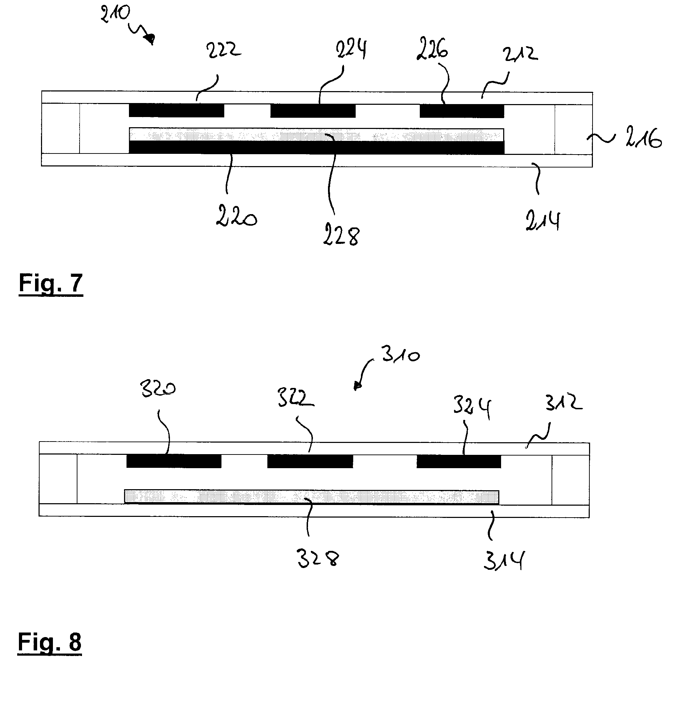

Die Fig. 7 zeigt eine andere Ausgestaltung eines Drucksensors 210 mit Elementen der vorliegenden Erfindung. Eine erste Trägerfolie 212 und eine zweite Trägerfolie 214 sind mittels eines Abstandhalters 216 in einem gewissen Abstand zueinander angeordnet. Auf der zweiten Trägerfolie ist eine erste Elektrode 220 aufgebracht, während auf der ersten Trägerfolie 212 drei Elektroden 222, 224, 226 derart in einem gewissen Abstand zueinander aufgebracht sind, dass jede der drei Elektroden 222, 224, 226 einem Bereich der Elektrode 220 gegenüber angeordnet ist. Eine Schicht 228 aus einem drucksensitiven Material ist in der vorliegenden Ausgestaltung beispielsweise auf der ersten Elektrode 220 aufgebracht. Alternativ könnte die Schicht 228 auf den drei Elektroden 222, 224, 226 aufgebracht sein.

Wird der derart ausgestaltete Drucksensor 210 mittig ausgelöst, so wird beim überschreiten einer ersten Druckschwelle zunächst ein druckabhängiger elektrischer Kontakt durch die Schicht 228 hindurch zwischen der Elektrode 224 und der Elektrode 220 hergestellt. Steigt die auf den Drucksensor 210 ausgeübte Druckkraft an, so wird beim Überschreiten einer zweiten Druckschwelle ebenfalls jeweils ein elektrischer Kontakt zwischen den Elektroden 222 und 220 bzw. 226 und 220 hergestellt. Der Drucksensor 210 weist demnach zwei unterschiedliche Schaltschwellen auf.

Wird der Drucksensor hingegen seitlich ausgelöst, beispielsweise im Bereich der Elektrode 226, so wird zunächst ein elektrischer Kontakt zwischen der Elektrode 226 und der Elektrode 220 hergestellt, bevor der Kontakt zwischen der Elektrode 224 und der Elektrode 220 hergestellt wird. Eine seitliche Auslösung des Drucksensors 210 kann dementsprechend sicher erkannt werden. Durch Ermitteln des Widerstands zwischen den Elektrodenpaaren 222 und 224 bzw. 224 und 226 kann überdies ermittelt werden, auf welcher Seite der Drucksensor ausgelöst ist.

Es ist anzumerken, dass durch die Einbringung von weiteren Elektroden auf die erste Trägerfolie, die Zahl der verschiedenen Schaltstufen des Drucksensors nach Bedarf erhöht werden kann. Alternativ oder zusätzlich kann die Zahl der Sachaltstufen auch dadurch erhöht werden, dass die Elektroden 222, 224 und 226 nicht symmetrisch bezüglich einer Mittelachse des Drucksensors angeordnet sind.

Eine weitere Ausgestaltung eines Drucksensors 310 ist in der Fig. 8 gezeigt. Es handelt sich um einen Drucksensor der in dem sogenannten Kurzschlussmodus arbeitet.

Bei diesem Drucksensor sind auf der ersten Trägerfolie 312 drei Elektroden 320, 322 und 324 aufgebracht, während eine Schicht 328 aus drucksensitivem Material auf der zweiten Trägerfolie 314 aufgebracht ist. Bei diesem Sensor kann durch die Ermittlung des Widerstands zwischen den Elektrodenpaaren 320 und 322 bzw. 322 und 324 beispielsweise ermittelt werden, auf welcher Seite der Drucksensor ausgelöst ist.

### Referenzzeichenliste

- 10: Drucksensor
- 12, 14: Trägerfolien
- 16: Abstandhalter
- 18: Aussparung
- 20, 22, 24, 26: Elektroden
- 28: drucksensitive Schicht
- 30: Druckkraft
- 40, 42: variable Widerstände der Flächenkontakte
- 44: Widerstand durch drucksensitive Schicht
- 46, 48: Schalter
- 100, 102, 104, 106: Drucksensoren
- 108, 110: Anschlussleitungen
- 112: optionale Leiterbahn
- 114: Diode
- 212,214: Trägerfolien
- 210: Drucksensor
- 216: Abstandhalters
- 220, 222, 224, 226: Elektroden
- 228: drucksensitive Schicht
- 310: Drucksensors
- 312,314: Trägerfolien
- 320, 322, 324: Elektroden
- 328: drucksensitive Schicht

## Patentansprüche

1. Drucksensor in Folienbauweise umfassend
eine erste Trägerfolie und eine zweite Trägerfolie, die mittels eines Abstandhalters in einem gewissen Abstand zueinander angeordnet sind, wobei der Abstandhalter mindestens eine Aussparung aufweist, die einen aktiven Bereich des Drucksensors definiert, in dem sich die beiden Trägerfolien gegenüber liegen,
eine erste Elektrode und eine zweite Elektrode und eine Schicht aus einem drucksensitiven Material, wobei die erste Elektrode, die zweite Elektrode und die Schicht aus drucksensitivem Material derart in dem aktiven Bereich auf die erste bzw. zweite Trägerfolie aufgebracht sind, dass beim Zusammendrücken der Trägerfolien durch die drucksensitive Schicht ein elektrischer Kontakt zwischen der ersten und der zweiten Elektrode hergestellt wird, **gekennzeichnet durch**
mindestens eine dritte Elektrode, die derart in dem aktiven Bereich des Drucksensors auf die erste oder zweite Trägerfolie aufgebracht ist, dass beim Zusammendrücken der Trägerfolien **durch** die drucksensitive Schicht ein elektrischer Kontakt zwischen der dritten Elektrode und der ersten Elektrode und/oder zwischen der dritten Elektrode und der zweiten Elektrode hergestellt wird.

2. Drucksensor nach Anspruch 1, wobei die erste, die zweite und die mindestens eine dritte Elektrode nebeneinander in einem gewissen Abstand zueinander auf der ersten Trägerfolie aufgebracht sind und wobei die drucksensitive Schicht auf der zweiten Trägerfolie derart aufgebracht ist, dass die drucksensitive Schicht der ersten Elektrode, der zweiten Elektrode und der mindestens einen dritten Elektrode gegenüber angeordnet ist.

3. Drucksensor nach Anspruch 1 oder 2, wobei die erste Elektrode und die zweite Elektrode in einem gewissen Abstand zueinander auf der ersten Trägerfolie angeordnet sind und wobei die mindestens eine dritte Elektrode auf der zweiten Trägerfolie derart angeordnet ist, dass die mindestens eine dritte Elektrode der ersten und der zweiten Elektrode gegenüber angeordnet ist.

4. Drucksensor nach Anspruch 3, wobei die drucksensitive Schicht auf die mindestens eine dritte Elektrode aufgebracht ist.

5. Drucksensor nach Anspruch 3, wobei die drucksensitive Schicht auf die erste Elektrode und die zweite Elektrode aufgebracht ist.

6. Drucksensor nach einem der Ansprüche 1 bis 5, wobei die erste Elektrode und die zweite Elektrode in einem gewissen Abstand zueinander auf der ersten Trägerfolie aufgebracht sind und wobei die mindestens eine dritte Elektrode auf der zweiten Trägerfolie derart angeordnet ist, dass die mindestens eine dritte Elektrode der ersten Elektrode gegenüber angeordnet ist und wobei die drucksensitive Schicht derart auf der zweiten Trägerfolie und der mindestens einen dritten Elektrode aufgebracht ist, dass die drucksensitive Schicht der ersten und der zweiten Elektrode gegenüber angeordnet ist.

7. Drucksensor nach einem der Ansprüche 1 bis 6, wobei die erste Elektrode und die zweite Elektrode in einem gewissen Abstand zueinander auf der ersten Trägerfolie aufgebracht sind und wobei eine dritte Elektrode und eine vierte Elektrode auf der zweiten Trägerfolie derart angeordnet sind, dass die dritte Elektrode der ersten Elektrode gegenüber angeordnet ist und die vierte Elektrode der zweiten Elektrode gegenüber angeordnet ist und wobei die drucksensitive Schicht derart auf der zweiten Trägerfolie, der dritten Elektrode und der vierten Elektrode aufgebracht ist, dass die drucksensitive Schicht der ersten und der zweiten Elektrode gegenüber angeordnet ist.

8. Sitzbelegungssensor, umfassend zwei Drucksensoren nach einem der vorhergehenden Ansprüche, die in einem gewissen Abstand zueinander einer Fläche eines Sitzes derart zugeordnet werden können, dass ein erster Drucksensor einem ersten Bereich des Sitzes zugeordnet ist und ein zweiter Drucksensor einem zweiten Bereich des Sitzes zugeordnet ist, **dadurch gekennzeichnet, dass** der erste und der zweite Drucksensor derart miteinander verschaltet sind, dass eine logische UND-Verknüpfung realisiert ist.

9. Sitzbelegungssensor nach Anspruch 8, wobei der erste und der zweite Drucksensor in Serie geschaltet sind.

10. Sitzbelegungssensor nach Anspruch 9, wobei die jeweils dritte Elektrode des ersten und des zweiten Drucksensors miteinander kontaktiert sind.

11. Sitzbelegungssensor nach Anspruch 8, mit mindestens zwei weiteren Drucksensoren, wobei ein dritter Drucksensor mit dem ersten Drucksensor derart miteinander verschaltet ist, dass eine logische ODER-Verknüpfung realisiert ist und wobei ein vierter Drucksensor mit dem zweiten Drucksensor derart miteinander verschaltet ist, dass eine logische ODER-Verknüpfung realisiert ist.

12. Sitzbelegungssensor nach Anspruch 11, wobei der erste und der dritte Drucksensor parallel geschaltet sind und wobei der zweite und der vierte Drucksensor parallel verschaltet sind.

13. Sitzbelegungssensor nach Anspruch 12, wobei die jeweils ersten Elektroden des ersten und des dritten Drucksensors bzw. des zweiten und des vierten Drucksensors miteinander kontaktiert sind, wobei die jeweils zweiten Elektroden des ersten und des dritten Drucksensors bzw. des zweiten und des vierten Drucksensors miteinander kontaktiert sind.
